Europäisches Patentamt

European Patent Office

Office européen des brevets

(11) Veröffentlichungsnummer: **0 106 332**
**B1**

(12) **EUROPÄISCHE PATENTSCHRIFT**

(45) Veröffentlichungstag der Patentschrift: **25.05.88**

(21) Anmeldenummer: **83110257.9**

(22) Anmeldetag: **14.10.83**

(51) Int. Cl.⁴: **B 65 G 47/34,** B 65 G 47/71, B 65 G 13/071

(54) **Stauförderer für Stückgut mit Ausschleusstation.**

(30) Priorität: **18.10.82 DE 3238511**

(43) Veröffentlichungstag der Anmeldung:
**25.04.84 Patentblatt 84/17**

(45) Bekanntmachung des Hinweises auf die
Patenterteilung:
**25.05.88 Patentblatt 88/21**

(84) Benannte Vertragsstaaten:
**AT BE CH DE FR GB IT LI NL SE**

(56) Entgegenhaltungen:
**EP-A-0 059 984**
**DE-A-2 853 483**
**US-A-1 809 456**
**US-A-4 011 935**

(73) Patentinhaber: **Gebhardt Fördertechnik GmbH**
**Postfach 304**
**D-6920 Sinsheim (DE)**

(72) Erfinder: **Felder, Christian, Dipl.-Ing.**
**Forsthausstrasse 12**
**D-6022 Dreieichenhain (DE)**

(74) Vertreter: **Ratzel, Gerhard, Dr.**
**Seckenheimer Strasse 36a**
**D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen Stauförderer für Stückgut mit Ausschleusstation an mindestens einer Stelle und mit einem sektionsweise unterteilten, antreibbaren und das Stückgut tragenden Transportmittel, wobei jede Sektion durch eine von einem ständig umlaufenden Zugmittel angetriebene Zwischenrolle antreibbar ist, die von einem in die Bewegungsbahn des Stückgutes ragenden Fühler aus einer Antriebsstellung in eine Freilaufstellung stellbar ist.

Aus der DE—OS 28 53 483 ist bereits ein Stauförderer für Stückgut der eingangs genannten Gattung bekannt. Bei diesem wird das Stückgut längs des Stauförderers transportiert und kann eventuell mittels besonderer Entnahmestationen nach einer Seite ausgeschleust werden. Jede Entnahmestation erfordert als separates Aggregat nicht nur technischen Aufwand, sondern auch einen eigenen Streckenbereich, der als Stauraum nicht verwendbar ist. Aus dem DE—GM 80 17 695 ist ferner eine Transportbandweiche bekannt, bei der am Ende einer Transportbahn eine Vorrichtung mit einem um eine waagerechte Achse klappbaren Weichentransportband vorgesehen ist, durch das das Stückgut wahlweise in eine obere oder eine untere weiterführende Transportbahn überführt werden kann. Dieses Weichentransportband weist einen eigenen Antrieb auf und stellt ein kontinuierlich arbeitendes Gerät dar, das für Stauzwecke nicht geeignet ist. Auch diese Vorrichtung benötigt einen eigenen Raum, der als Stauraum nicht verwendbar ist. Schließlich ist aus der EP—A—59 984 noch eine Ausschleusvorrichtung in einer Förderbahn bekannt, bei der ein Teil des Transportmittels in einer um eine waagerechte Achse schwenkbaren Ausschleusklappe nach oben oder unten klappbar gelagert ist. Die Schwenkachse der Ausschleusklappe liegt dabei koaxial zur Achse der ersten, am Einlaufende liegenden Tragrolle der Ausschleusklappe. Das Stückgut wird auf dieser Förderbahn jedoch kontinuierlich transportiert und kann nicht gestaut und gespeichert werden. Die bekannten Stückgutförderer mit Ausschleusstation können somit entweder nicht als Stauförderer arbeiten oder benötigen zum Ausschleusen als Stauraum nicht verwendbare Streckenbereiche.

Aufgabe der Erfindung ist es daher, einen Stauförderer mit großem Stauvolumen und einer großen Anzahl von Ausschleusstationen zu schaffen, durch die das Ausschleusen mit hoher Geschwindigkeit erfolgt.

Diese Aufgabe wird durch die Erfindung dadurch gelöst, daß als Ausschleusstation eine Sektion des Transportmittels in einem um eine parallel zur Transportebene und senkrecht zur Förderrichtung angeordnete Klappachse klappbaren Sektionsrahmen gelagert ist, die Zwischenrolle am Einlaufende der Sektion am Sektionsrahmen und etwa koaxial zur Klappachse angeordnet ist und die Zwischenrolle unabhängig von der Stellung des Sektionsrahmens in ständigem Eingriff mit dem Zugmittel ist.

Die mit der Erfindung erzielten Vorteile bestehen insbesondere darin, daß sowohl die gesamte Länge des Stauförderers zum Stauen von Stückgütern verwendet, als auch jede Station gleichzeitig als Ausschleusstation ausgebildet werden kann. Die Staumenge entspricht daher der eines normalen Stauförderers mit der Möglichkeit des Ausschleusens auf jedem Stauplatz. Die Ausschleusstation benötigt daher keinen eigenen Raum, so daß die gesamte Förderlänge wie bisher bei einem Nur-Stauförderer als Stauraum genutzt werden kann. Andererseits ist die zum Ausschleusen erforderliche Ausschwenkbewegung so kurzzeitig ausführbar, daß der Transport auf dem Stauförderer in üblicher Geschwindigkeit erfolgen kann. Der Stauförderer nach der Erfindung vereinigt daher die Funktion des Stauens mit der des Ausschleusens, ohne daß ein erhöhter Raumbedarf erforderlich ist. Der Stauförderer erfüllt daher Stau- und Verteileraufgabe zugleich.

Weitere Ausgestaltungen der Erfindung sind in den Unteransprüchen enthalten.

Ausführungsbeispiele der Erfindung sind in der Zeichnung dargestellt und werden im folgenden näher beschrieben.

Es zeigen:

Fig. 1 die Seitenansicht des Stauförderers;

Fig. 2 die Draufsicht auf den Stauförderer;

Fig. 3 die Schnittansicht gem. Linie III—III in Fig. 2;

Fig. 4 die Seitenansicht einer Sektion;

Fig. 5 die Teildraufsicht auf die Sektion gem. Fig. 4;

Fig. 6 die Schnittansicht gem. Linie VI—VI in Fig. 4;

Fig. 7 die Schnittansicht gem. Linie VII—VII in Fig. 4;

Fig. 8 die Seitenansicht einer Sektion anderer Ausführung;

Fig. 9 die Seitenansicht einer Sektion in einer weiteren Ausführungsform.

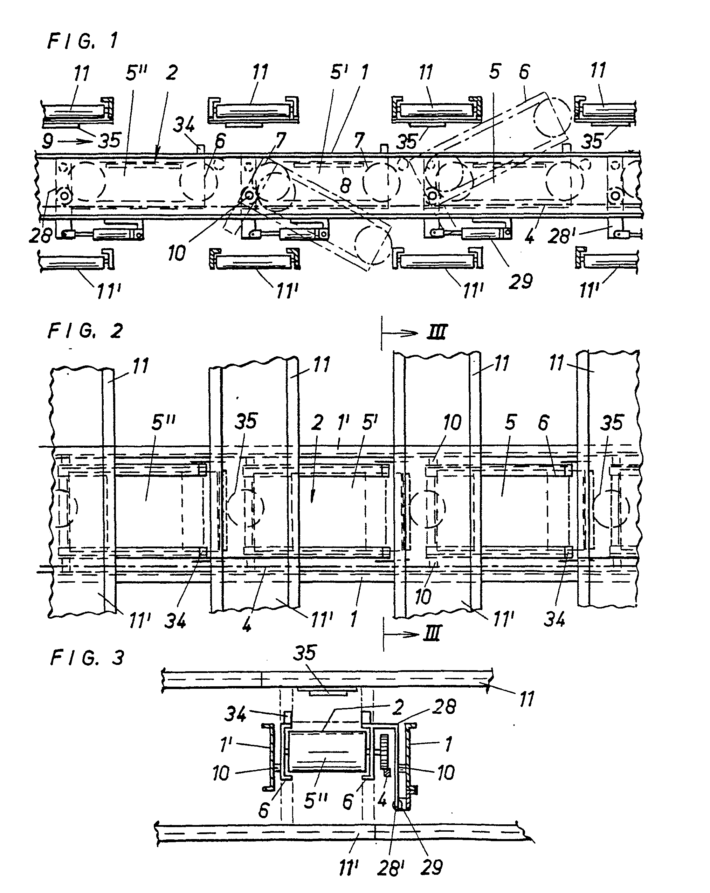

Nach den Fig. 1 bis 3 weist der Stauförderer zwischen parallelen Längsrahmen 1 und 1' ein Transportmittel 2 in Gestalt eines Transportbandes, von Transportketten o. dgl. oder von Tragrollen auf. Das Transportmittel 2 ist in mehrere, hintereinanderliegende Sektionen 5, 5', 5'' unterteilt, die jeweils mittels einer Zwischenrolle 14 unabhängig voneinander von einem umlaufenden Zugmittel 4, insbesondere einer Kette, antreibbar sind. Das Zugmittel 4 wird von einem nicht dargestellten Motor in Fig. 1 von links nach rechts angetrieben.

Jede Sektion 5, 5', 5'' ist in einem Sektionsrahmen 6 gelagert, in dem an beiden Enden Umlenkrollen 7 drehbar angeordnet sind, die von dem bandförmig ausgebildeten Transportmittel 2 umschlungen sind. Zwischen den Umlenkrollen 7 ist je nach Ausbildung des Transportmittels 2 eine Unterstützung 8 zur Aufnahme der vom zu transportierenden Stückgut erzeugten Druckkraft vorgesehen. Bei einer angenommenen von links nach rechts zeigenden Transportrichtung gem. Pfeil 9 ist der Sektionsrahmen 6 am entgegengesetzt zur Transportrichtung 9 liegenden linken Ende an einer Klappachse 10 an den Längsrahmen 1 und 1' angelenkt und kann aus der Transportebene des Stauförderers nach oben und/oder unten geklappt werden, wie in Fig. 1 strichpunktiert angedeutet ist. Ober- und/oder unterhalb sind der jeweiligen Klappstellung der Sektionen 5, 5', 5'' zugeordnete und quer zur Transportrichtung 9 angeordnete Verteilerbahnen 11 und 11' angeordnet, die direkt oder indirekt zu einem bestimmten Ziel führen und beliebig ausgebildet sein können. Vorzugsweise sind sie jedoch mindestens im Übernahmebereich aus der Sektion 5, 5', 5'' angetrieben. Es ist ersichtlich, daß ein auf dem Transportmittel 2 transportiertes Stückgut wahlweise durch Klappen einer der als Ausschleusstation wirkenden Sektionen 5, 5', 5'' nach oben oder unten ausgeschleust und einem vorbestimmten Ziel zugeleitet werden kann.

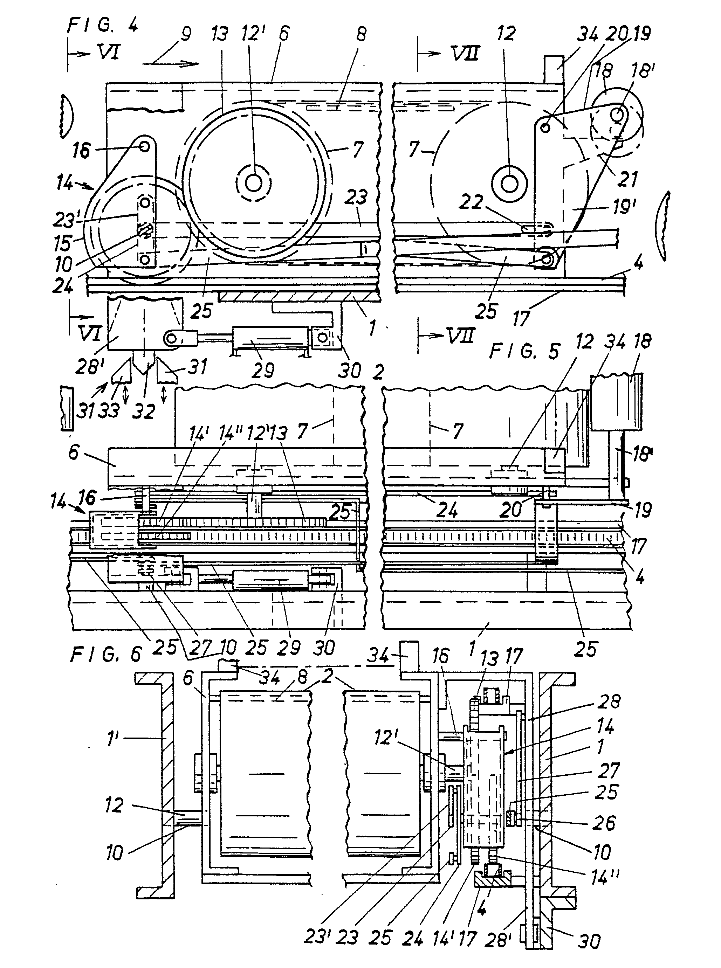

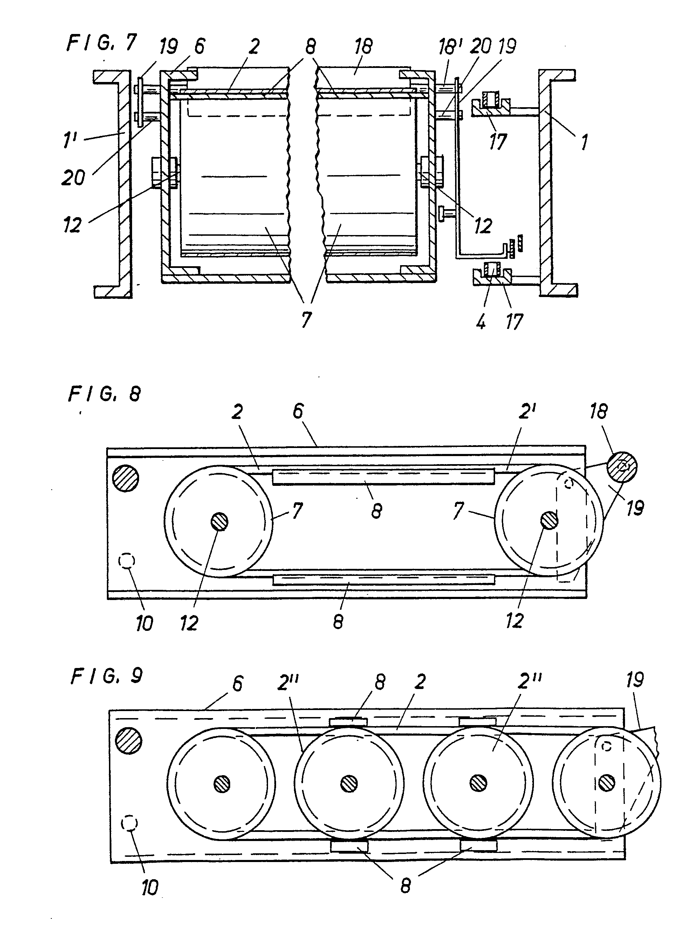

Wie deutlicher aus den Fig. 4 bis 7 hervorgeht, sind die Umlenkrollen 7 jeder Sektion 5, 5', 5'' auf Achsen 12 im Sektionsrahmen 6 drehbar gelagert. An eingangsseitigen Ende des Sektionsrahmens 6 ist die Achse 12' als durch den Sektionsrahmen geführte Welle ausgebildet, die außen ein Antriebsrad 13 trägt, das im Ausführungsbeispiel als Zahnrad ausgebildet ist. Mit diesem Antriebsrad 13 steht ein entsprechendes Gegenrad 14' einer Zwischenrolle 14 in ihrer Antriebsstellung in Antriebsverbindung. Das Gegenrad 14' ist mit einem Triebrad 14'' starr verbunden und mit diesem in einem Gehäuse 15 drehbar gelagert. Letzteres ist etwa vertikal oberhalb der Drehachse des Gegenrades 14' um eine am Rahmen 6 befestigte Schwenkachse 16 pendelnd gelagert, so daß die Zwischenrolle 14 aus der dargestellten Antriebsstellung im Uhrzeigersinn in eine Freilaufstellung geschwenkt werden kann, in der das Gegenrad 14' außer Eingriff vom Antriebsrad 13 ist. Das Triebrad 14'' wird vom Zugmittel 4 angetrieben und bleibt mit diesem vorzugsweise in ständiger Antriebsverbindung. Bei Ausbildung des Zugmittels 4 als Kette ist das Triebrad 14'' entsprechend als Kettenrad ausgebildet, das ständig, also auch in der Freilaufstellung, in die Kette des Zugmittels 4 eingreift. Zur Unterstützung des Zugmittels 4 sind am Längsrahmen 1 befestigte Stützprofile 17 vorgesehen.

Zum Steuern der Zwischenrolle 14 dient ein z.B. als Rolle ausbildeter Fühler 18, der beiderseits an Fühlerhebeln 19 gelagert ist, die um am ausgangsseitigen Ende des Rahmens 6 angebrachte Achsen 20 senkrecht zur Transportebene des Stückgutes auf dem Transportmittel 2 schwenken können. Der Fühler 18 ragt normalerweise in die Transportebene des Stückgutes hinein und kann von diesem nach unten in eine außerhalb befindliche Schaltstellung gedrückt werden, wie in Fig. 4 strichpunktiert angedeutet ist. In dieser Schaltstellung liegt die Achse 18' des Fühlers 18 auf einem Anschlag 21 des Sektionsrahmens 6 und dient so als Stütze für das darüber gleitende Stückgut. Der auf der Seite der Zwischenrolle 14 befindliche Fühlerhebel 19 besitzt einen nach unten ragenden Arm 19', an dem unten durch ein Langloch 22 eine Schaltstange 23 angelenkt ist, die mit ihrem anderen, nach oben abgewinkelten Ende 23' am oberen Ende eines Doppelhebels 24 gelenkig angeschlossen ist. Letzterer ist koaxial zur Achse des Gegenrades 14' am Gehäuse 15 der Zwischenrolle 14 der gleichen Sektion 5, 5', 5'' schwenkbar gelagert. Am unteren Ende des Doppelhebels 24 ist ein Schaltgestänge 25 angelenkt, das mit seinem anderen Ende am Arm 19' des Fühlerhebels 19 der in Transportrichtung davor liegenden Sektion 5, 5', 5'' angeschlossen ist. Um beim Klappen des Sektionsrahmens 6 eine Störung in der Steuerung zu vermeiden, ist das Schaltgestänge 25 zweiteilig und mit einem Gelenk 26 an der Trennstelle ausgestattet, das etwa koaxial zur Klappachse 10 an einem Haltearm 27 angeordnet ist. Dieser ist an einem die Klappachse 10 tragenden Stellarm 28 angelenkt, der oben die Zwischenrolle 14 überbrückt und am Sektionsrahmen 6 befestigt ist.

An einer nach unten ragenden Verlängerung 28' des Stellarmes 28 ist ein Stellzylinder 29 angeschlossen, der am Längsprofil 1 an einer Halterung 30 gelagert ist. Erfolgt das Klappen des Sektionsrahmens 6 nur nach einer Richtung, also nach oben oder unten, dann können die beiden Endstellungen durch den Hubweg des Stellzylinders 29 festgelegt sein. Soll dagegen wahlweise nach oben oder unten geschwenkt werden, dann ist eine Arretierung 31, wie sie beispielweise in Fig. 4 dargestellt ist, vorgesehen. Hier ist am unteren Ende der Verlängerung 28' ein dachförmiger, nach unten ragender Anschlag 32 vorgesehen, an dem beiderseits in der Transportstellung Stellkeile 33 und 33' anliegen, die mittels einer Hilfskraft, wie z.B. Stellzylinder, aus der dargestellten Sperrstellung in eine Freigabestellung nach unten verstellt werden können, so daß der Sektionsrahmen 6 in die eine oder andere Richtung geklappt werden kann, wie strichpunktiert angedeutet ist.

Werden Stückgüter auf dem Transportmittel 2 transportiert, dann erfolgt bei einem Stau bzw. einer Speicherung das stückweise Stillsetzen der Stückgüter durch Ausschalten der jeweiligen Sektion 5, 5', 5''. Wird aus diesem Grund ein Fühler 18 niedergedrückt, dann wird durch das Schaltgestänge 25 der Doppelhebel 24 der Zwischenrolle 14 der entgegengesetzt zur Transportrichtung dahinter liegenden Sektion 5, 5' oder 5'' im Uhrzeigersinn verstellt, so daß das Langloch 22 durch Verschieben der Schaltstange 23 nach rechts in seine andere Endstellung gelangt. Wird nun der Fühler 18 auch dieser Sektion 5, 5', 5'' ebenfalls niedergedrückt, dann wird die Schaltstange 23 durch die Schaltbewegung in Uhrzeigersinn nach links gedrückt und, weil das Schaltgestänge 25 ortsfest verbleibt, die Zwischenrolle 14 im Uhrzeigersinn in die Freilaufstellung gestellt. Der Antrieb ist unterbrochen und das Stückgut bleibt stehen. Wird dagegen der Fühler 18 der in Transportrichtung davor befindlichen Sektion 5, 5', 5'' freigegeben, dann kann die Zwischenrolle 14 der dahinter liegenden 5, 5', 5'' infolge der Zugkraft des Zugmittels 4 bzw. zusätzlich durch Federkraft in die Antriebsstellung zurückschwenken. Die Antriebsverbindung ist wieder hergestellt und das auf dem Transportmittel 2 befindliche Stückgut wird weiter transportiert.

Im Bereich jeder Sektion 5, 5', 5'' ist darüber oder daneben eine Lesestation 35 angeordnet, durch die die auf dem Stückgut angebrachte Codierung abgelesen wird, und zwar vorzugsweise unabhängig von der jeweiligen Winkelstellung zur Transportrichtung. Das Ergebnis wird auf die zugehörige Sektion 5, 5', 5'' übertragen, insbesondere auf die in Transportrichtung 9 folgende, so daß mit beginnendem Weitertransport die angeschlossene Sektion 5, 5', 5'' nach oben oder unten geklappt wird, wenn die Codierung zutrifft, um das betreffende Stückgut auszuschleusen. Das Verlassen der Sektion 5, 5', 5'' kann zusätzlich durch eine am Ausgangsende angebrachte Lichtschranke 34 überwacht werden, so daß das Klappen des Sektionsrahmens 6 möglichst kurzzeitig erfolgt, um einen zügigen Stückguttransport mit üblicher Geschwindigkeit zu erreichen.

In weiterer Ausgestaltung kann das Transportmittel 2 auch als Kettenförderer gem. Fig. 8 ausgebildet sein, bei dem die das Stückgut tragenden Ketten 2' über entsprechend gelagerte Unterstützungen 8 geführt sind. In anderer Ausgestaltung gem. Fig. 9 kann das Transportmittel 2 auch aus mehreren Tragrollen 2'' bestehen, die z.B. durch ein gemeinsames, umlaufendes Zugmittel, wie Kette oder Keilriemen, gemeinsam angetrieben werden, wenn die nicht dargestellte Zwischenrolle 14 in Antriebsstellung ist.

## Patentansprüche

1. Stauförderer für Stückgut mit Ausschleusstation an mindestens einer Stelle und mit einem sektionsweise unterteilten, antreibbaren und das Stückgut tragenden Transportmittel (2), wobei jede Sektion (5, 5', 5'') durch eine von einem ständig umlaufenden Zugmittel (4) angetriebene Zwischenrolle (14) antreibbar ist, die von einem in die Bewegungsbahn des Stückgutes ragenden Fühler (18) aus einer Antriebsstellung in eine Freilaufstellung stellbar ist, dadurch gekennzeichnet, daß als Ausschleusstation eine Sektion (5, 5', 5'') des Transportmittels (2) in einem um eine parallel zur Transportebene und senkrecht zur Förderrichtung angeordnete Klappachse (10) klappbaren Sektionsrahmen (6) gelagert ist, die Zwischenrolle (14) am Einlaufende der Sektion (5, 5', 5'') am Sektionsrahmen (6) und etwa koaxial zur Klappachse (10) angeordnet ist und die Zwischenrolle (14) unabhängig von der Stellung des Sektionsrahmens (6) in ständigem Eingriff mit dem Zugmittel (4) ist.

2. Stauförderer nach Anspruch 1, dadurch gekennzeichnet, daß der Fühler (18) am freien Ende der Sektion (5, 5', 5'') am Sektionsrahmen (6) an Fühlerhebeln (19) schwenkbar gelagert und durch eine Schaltstange (23) mit der Zwischenrolle (14) der gleichen Sektion (5, 5', 5'') und durch ein Schaltgestänge (25) mit der Zwischenrolle (14) der entgegengesetzt zur Transportrichtung (9) benachbarten Sektion (5, 5', 5'') verbunden ist, wobei das Schaltgestänge (25) in Verlängerung der Klappachse (10) ein Gelenk (16) aufweist, das an einem am Sektionsrahmen (6) angelenkten Haltearm (27) angeordnet ist.

3. Stauförderer nach Anspruch 1 oder 2, dadurch gekennzeichnet, daß der als Schaltrolle ausgebildete Fühler (18) in der gedrückten Schaltstellung auf einem Anschlag (21) des klappbaren Sektionsrahmens (6) aufliegt.

## Revendications

1. Convoyeur accumulateur pour marchandises en ballot avec écluse de sortie en au moins un point et avec un moyen de transport (2) subdivisé en sections, pouvant être entraîné et portant les marchandises en ballot, chaque section (5, 5', 5'') pouvant être entraînée par un rouleau intermédiaire (14) entraîné par un organe de traction (4) tournant en permanence, qui peut passer, sous l'action d'un détecteur (18) pénétrant sur la trajectoire de déplacement des marchandises en ballot, d'une position d'entraînement à une position de régime libre, caractérisé en ce que, comme écluse de sortie, une section (5, 5', 5'') du moyen de transport (2) est placée dans un bâti de section (6) pouvant basculer autour d'un axe de basculement (10) disposé parallèlement au plan de transport et perpendiculairement à la direction de transport, en ce que le rouleau intermédiaire (14) est disposé à l'extrémité d'entrée de la section (5, 5', 5'') sur le bâti de section (6) et sensiblement coaxialement par rapport à l'axe de basculement (10), et en ce que la rouleau intermédiaire (14) est en prise permanente avec l'organe de traction (4), indépendamment de la position du bâti de section (6).

2. Convoyeur accumulateur selon la revendication 1, caractérisé en ce que le détecteur (18) est placé de façon à pouvoir pivoter sur des leviers de détecteur (19) à l'extrémité libre de la section (5, 5', 5'') sur le bâti de section (6) et est relié par une tringle de manoeuvre (23) au rouleau intermédiaire (14) de la même section (5, 5', 5'') et par une tringlerie de manoeuvre (25) au rouleau intermédiaire (14) de la section (5, 5', 5'') voisine dans le sens opposé au sens de transport (9), la tringlerie de manoeuvre (25) comportant, dans le prolongement de l'axe de basculement (10), une articulation (16) qui est placée sur un bras de retenue (27) articulé au bâti de section (6).

3. Convoyeur accumulateur selon la revendication 1 ou 2, caractérisé en ce que le détecteur (18), conformé de manoeuvre, repose, dans la position d'enclenchement appuyée, sur une butée (21) du bâti de section basculant (6).

## Claims

1. An accumulator conveyor for individual articles with a discharge station at at least one location and with a conveying means (2) which is

## 0 106 332

divided into sections, which can be driven and which carries the articles, wherein each section (5, 5', 5'') can be driven by an intermediate roller (14) which is driven by a continuously rotating traction means (4) and which is movable from a drive position into a freewheeling position by a sensor (18) projecting into the path of movement of the articles, characterised in that as the discharge station a section (5, 5', 5'') of the conveying means (2) is mounted in a section frame (6) which can tilt about a pivot axis (10) disposed parallel to the conveying plane and perpendicular to the feed direction, the intermediate roller (14) being arranged at the entry end of the section (5, 5', 5'') on the section frame (6) and substantially coaxial to the pivot axis (10), and the intermediate roller (14) being in constant engagement with the traction means (4) irrespective of the position of the section frame (6).

2. An accumulator conveyor according to Claim 1, characterised in that the sensor (18) at the free end of the section (5, 5', 5'') on the section frame (6) is pivotably mounted on sensor levers (19) and is connected by an actuating rod (23) to the intermediate roller (14) of the same section (5, 5', 5'') and by an actuating linkage (25) to the intermediate roller (14) of the adjacent section (5, 5', 5'') in the opposite direction to the conveying direction (9), wherein the actuating linkage (25) has, as an extension of the pivot axis (10), an articulation (16) which is mounted on a retaining arm (27) articulated to the section frame (6).

3. An accumulator conveyor according to Claim 1 or 2, characterised in that in its depressed actuating position the sensor (18), which comprises an actuating roller, bears on an abutment (21) of the tiltable section frame (6).

FIG. 1

FIG. 2

FIG. 3

F I G. 4

F I G. 5

F I G. 6

FIG. 7

FIG. 8

FIG. 9